# EUROPÄISCHE PATENTSCHRIFT

(11) **EP 1 872 090 B1**
(45) Veröffentlichungstag und Bekanntmachung des Hinweises auf die Patenterteilung: **23.02.2011**
(21) Anmeldenummer: 06721218.3
(22) Anmeldetag: 20.04.2006
(51) Int. Cl.: G01D 3/02, G01L 9/08

(54) **MESSSYSTEM ZUR ZYLINDERDRUCKMESSUNG AN BRENNKRAFTMASCHINE**
MEASUREMENT SYSTEM FOR MEASURING CYLINDER PRESSURE IN AN INTERNAL COMBUSTION ENGINE
SYSTEME DE MESURE DESTINE A LA MESURE DE LA PRESSION DANS LES CYLINDRES D'UN MOTEUR A COMBUSTION INTERNE

(30) Priorität: 21.04.2005 AT 2492005
(43) Veröffentlichungstag der Anmeldung: 02.01.2008
(73) Patentinhaber: AVL List GmbH, 8020 Graz (AT)
(72) Erfinder: STELZER, Andreas, A-4040 Linz (AT); HAUSER, Robert, A-9551 Bodensdorf (AT); SCHUSTER, Stefan, A-4020 Linz (DE); SCHEIBLHOFER, Stefan, A-4030 Linz (AT); LEITMEIER, Klaus, A-8010 Graz (AT)
(74) Vertreter: Pinter, Rudolf
(86) Internationale Anmeldenummer: PCT/AT2006/000160
(87) Internationale Veröffentlichungsnummer: WO 2006/110935

(56) Entgegenhaltungen:
- WO-A-2005/095895
- AT-U2- 5 042
- US-A- 5 220 836

## Beschreibung

Die Erfindung betrifft ein Messsystem zur Zylinderdruckmessung an Brennkraftmaschinen, mit mehreren austauschbaren, sich in ihrer Messcharakteristik unterscheidenden piezoelektrischen Drucksensoren, die im Betrieb über ein Anschlusskabel mit einer einen Ladungsverstärker aufweisenden Auswerteeinheit verbunden sind und integrierte Identifikationseinheiten mit SAW-Elementen aufweisen, deren Identifikationsdaten über das Anschlusskabel von einer Abfrageeinheit, die eine FSCW (**f**requency **s**tepped **c**ontinuous **w**ave)-Radareinheit enthält, auslesbar sind.

Messsysteme der genannten Art sind grundsätzlich beispielsweise aus AT 5.042 U2 bekannt und bieten den Vorteil, dass die Speicherung der teilweise sehr umfangreichen sensorrelevanten Daten aus dem unmittelbaren Nahbereich des Sensors mit den dort herrschenden hohen Temperaturen, Vibrationen und sonstigen Störungen ausgelagert werden kann, wobei im bzw. am Sensor selbst nur eine Identifikationseinheit mit einer mit der Speichereinheit für die sensorrelevanten Daten korrelierbaren Sensorkennung mit nur wenigen Identifikationsdaten verbleibt. Diese wenigen, und damit auch in gegenüber rauhen Umgebungsbedingungen unkritischen einfachen Elementen speicherbaren Identifikationsdaten (z.B. ein einfacher Binärcode) verbleiben physisch fest mit dem Sensor verbunden, während die sonstigen sensorrelevanten Daten (wie etwa Empfindlichkeitskurven, Kalibrierdaten und dgl.) in der ausgelagerten Speichereinheit vorliegend sind, wobei zur Sicherstellung der Zusammengehörigkeit von Speichereinheit und Sensor nur die Überprüfung der einfachen Sensorkennung auf Zugehörigkeit erforderlich ist.

Abgesehen von verschiedenen einfachen, in der genannten AT 5.042 U2 auch angesprochenen Ausbildungen der Identifikationseinheit am Sensor kann diese wie eingangs beschrieben auch mit bekannten SAW-Elementen ausgeführt werden. Die Verwendung von akustischen Oberflächenwellen-Elementen (surface acoustic wave, SAW) als Sensoren und/oder Identifikationsmarken (ID-Marken) ist seit geraumer Zeit bekannt. Neuere Arbeiten (Bruckner et.al, Proc. 2003 IEEE Freq. Contr. Symp., 942 ff.) haben gezeigt, dass derartige Systeme besonders geeignet sind, als ID-Marken und/oder zur Überwachung von physikalischen oder chemischen Parametern in existierende technische Systeme eingebaut zu werden. Besonders vorteilhaft dabei ist, dass derartige Systeme vollständig passiv betrieben werden können, d.h. keine Energieversorgung, wie beispielsweise eine Batterie, im Bereich der ID-Marke bzw. des Sensors erforderlich ist. Weiters sind SAW-Elemente thermisch und mechanisch robust, hochgradig miniaturisierbar und in Form und Design an spezifische Anwendungen anpassbar.

Die Eignung eines SAW-Systems wurde beispielsweise für den Einbau einer passiv abfragbaren ID-Marke in kapazitive Zylinderinnendrucksensoren demonstriert. SAW-Elemente sind dabei, anders als Halbleiterbauelemente, in der Lage auch bei hohen Temperaturen und Erschütterungen über längere Zeiträume zuverlässig zu funktionieren. Analoge Anwendungen für andere passive zu überwachende bzw. zu identifizierende Systeme sind möglich, ebenso die Verwendung von SAW-Elementen um physikalische Größen, wie beispielsweise Temperatur, magnetische Feldstärken und/oder chemische Parameter, wie z.B. thermische Zersetzungsprodukte zu detektieren.

Allen derartigen Anwendungen gemeinsam ist, dass das SAW-System eine Ergänzung eines vorhandenen Systems darstellt. Das bedeutet, dass das SAW-Gesamtsystem, bestehend aus einer Sende/Empfangseinheit ("SAW-Lesegerät") und dem oder den eigentlichen SAW-Elementen in der Regel ohne Änderung der, beispielsweise elektrischen oder auch einbautechnisch-konstruktiven, Eigenschaften des zu überwachenden Systems in das Gast-System zu integrieren ist. Für viele Anwendungen ist es durch diese Einschränkungen nicht möglich das System für den meist die Übertragung von Hochfrequenzsignalen (HF-Signale) beinhaltenden Betrieb eines SAW-Elements optimal auszulegen. Diese eingeschränkte bzw. fehlende Möglichkeit der Anpassung ist problematisch, da die Verwendung von für den SAW-Betrieb erforderlichen HF-Signalen, im gegenständlichen Fall im MHz - GHz - Bereich, in einem dafür nicht angepassten System störende Reflexionen zur Folge hat, die mehrere Größenordnungen stärker sein können als das zu detektierende Nutzsignal. Derartige Interferenzen sind in der Regel prohibitiv für die Verwendung von einfachen, kostengünstigen SAW-Lesegeräten. Gleichzeitig steht einer Umgehung des Problems durch Einsatz von komplexeren SAW-Leseeinheiten nicht nur die Anforderung entgegen, auch diese Einheit zu integrieren, was auf Grund der typischerweise deutlich größeren Baugröße oft nicht möglich ist, sondern auch und besonders die Anforderung die (Gesamt-)Kosten möglichst gering zu halten.

Insbesonders kritisch ist auch die Forderung, dass trotz der aus Handhabungsgründen gewählten Verbindung des piezoelektrischen Drucksensors selbst sowie auch der integrierten Identifikationseinheit über ein gemeinsames Anschlusskabel die Messkette vom piezoelektrischen Element bis zum Ladungsverstärkereingang sehr hochohmig (typischerweise etwa im Bereich von 10¹⁴ Ohm) gehalten werden muss, da sonst über längere Zeitintervalle nicht genau gemessen werden kann, da Drifterscheinungen unweigerlich zu Messfehlern führen würden. Die Ankoppelung des SAW-Lesegerätes und des Ladungsverstärkers an die gemeinsame Signalleitung des Anschlusskabels ist daher sehr wichtig.

Aufgabe der vorliegenden Erfindung ist es, ein Messsystem der eingangs genannten Art so zu verbessern, dass die erforderliche Ankopplung von SAW-Lesegerät und Ladungsverstärker an die gemeinsame Signalleitung den beschriebenen Anforderungen an die gesamte Messkette entspricht, um mit den verwendeten Sensoren genau und auch über längere Zeitintervalle messen zu können.

Diese Aufgabe wird gemäß der vorliegenden Erfindung dadurch gelöst, dass Auswerteeinheit und Abfrageeinheit über eine zwischengeschaltete gemeinsame Koppeleinheit mit dem Anschlusskabel verbindbar sind, und dass die Koppeleinheit eine Koppelkapazität und eine Koppelinduktivität aufweist, welche parallel mit dem Signalleiter des Anschlusskabels verbindbar sind, wobei die Abfrageeinheit mittels der Koppelkapazität hochfrequent an die Signalleitung des Anschlusskabels gekoppelt ist, während der Ladungsverstärker der Auswerteeinheit mittels der Koppelinduktivität niederfrequent an die Signalleitung des Anschlusskabels gekoppelt ist. Diese Koppeleinheit dient damit einerseits zur Trennung von Nutzsignal des Drucksensors und Identifikationssignal der integrierten Identifikationseinheit und andererseits zur Beibehaltung der Hochohmigkeit der Messkette zwischen dem piezoelektrischen Drucksensor und dem Ladungsverstärkereingang, womit Beeinträchtigungen der Messeigenschaften der Sensoren verhindert werden und gleichzeitig auf einfache Weise die beschriebene Identifikation derselben möglich bleibt.

Wie oben bereits angesprochen besteht ein Problem bei dieser kombinierten Messung und Identifikation darin, dass das gesamte System zumeist nicht oder zumindest nicht optimal für den die Übertragung von Hochfrequenzsignalen beinhaltenden Betrieb der SAW-Elemente ausgelegt werden kann, womit von Reflektionen herrührende Störsignale oft um mehrere Größenordnungen stärker sein können als die für die Identifikationen zu detektierenden Nutzsignale. In diesem Zusammenhang ist eine weitere Ausgestaltung der Erfindung besonders vorteilhaft, gemäß welcher zum Ausgleich einer nicht ausreichenden Impedanzanpassung des SAW-Elementes im Drucksensor eine an sich bekannte SFSCW (**s**witched **f**requency **s**tepping **c**ontinuous **w**ave)-Radareinheit in der Abfrageeinheit angeordnet ist. Nähere Einzelheiten dazu und die damit insgesamt erzielbaren Vorteile sind im folgenden in der Beschreibung der beigeschlossenen Figuren näher erläutert.

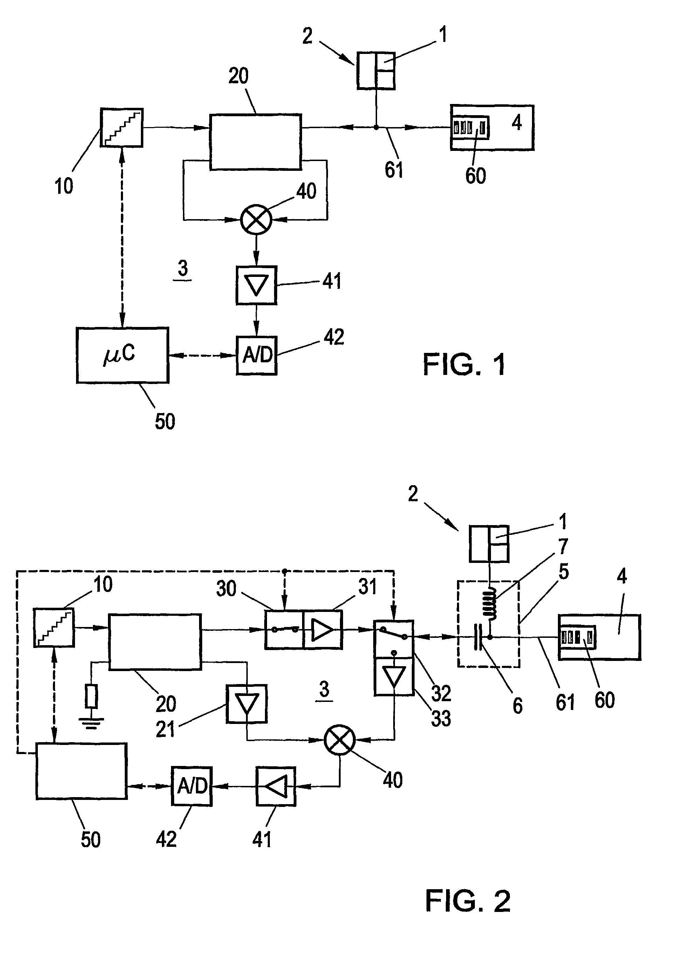

Fig. 1 zeigt den prinzipiellen Aufbau eines Messsystems der eingangs beschriebenen Art gemäß bisherigem Stand der Technik und Fig. 2 zeigt eine entsprechende Anordnung gemäß der vorliegenden Erfindung.

Der prinzipielle Aufbau eines Frequenz-Stufen Radarsystems (frequency stepped continuous wave radar, FSCW-Radar) gemäß derzeitigem Stand der Technik ist in Fig. 1 dargestellt. Die Abfragesignale werden von einem extern regelbaren, frequenzstabilisierten HF-Sendemodul 10 erzeugt. In einem HF-Koppler 20 wird ein (geringer) Teil des Signals für Referenzzwecke ausgekoppelt und der Rest des Anregungssignals über eine Leitung 61 zum SAW-Element 60 geführt. Die Ankopplung des SAW-Elements an die Signalleitung kann dabei anwendungsabhängig über eine galvanische Verbindung oder auch berührungsfrei über eine elektromagnetische Nahfeldkopplung erfolgen. Auf dem SAW-Element wird die elektromagnetische Welle in eine akustische Oberflächenwelle umgewandelt, die in Folge mit den Strukturen auf der Oberfläche des SAW-Elements interagiert und ein charakteristisches Signal liefert, das den ID-Code und beispielsweise auch einen Sensorwert enthält. Dieses Signal wird über die Leitung 61 und den HF-Koppler 20 zu einem HF-Mischer 40 geleitet, der aus dem Referenzsignal und dem SAW-Signal ein Messsignal berechnet, welches verstärkt 41, in einem A/D-Wandler 42 digitalisiert und an die Steuer- und Auswerteeinheit 50 übermittelt wird. Nach dem Prinzip des FSCW-Radars wird dieser Vorgang für eine Anzahl unterschiedlicher Frequenzen innerhalb eines Frequenzbandes in einem für das SAW-Element vorteilhaften Frequenzbereich, typischerweise im MHz - GHz - Bereich, wiederholt und aus den gesamten Daten die Sensorantwort rekonstruiert.

Ein derartiges System ist kostengünstig und kann in einer ausreichend kompakten Bauart realisiert werden, um beispielsweise in eine vorhandene Systemsteuereinheit integriert werden zu können. Auf diesem Prinzip basierende Lesegeräte sind für einen praktischen Einsatz gut geeignet, vorausgesetzt dass die SAW-Signale sich ausreichend stark vom Reflexionen, Rauschen und sonstigen Hintergrundeffekten unterscheiden. Wie oben ausgeführt ist dies in vielen Anwendungen nicht gewährleistet. Ein weiteres Problem ist dabei in der Anbindung der einen Ladungsverstärker 1 enthaltenden Auswerteeinheit 2 zu sehen, da über das Anschlusskabel bzw. die Signalleitung 61 sowohl die Abfrageeinheit 3 als auch die Auswerteeinheit 2 mit dem Sensor4 samt integrierter Identifikationseinheit (SAW-Element 60) verbunden sind.

Bei der erfindungsgemäßen Anordnung nach Fig. 2 ist nun als erstes gegenüber Fig. 1 zusätzlich vorgesehen, dass Auswerteeinheit 2 und Abfrageeinheit 3 über eine zwischengeschaltete gemeinsame Koppeleinheit 5 mit dem Anschlusskabel 61 verbindbar sind. Diese Koppeleinheit 5 weist zumindest eine Koppelkapazität 6 und eine Koppelinduktivität 7 auf, welche parallel mit dem Signalleiter des Anschlusskabels 61 verbindbar sind wobei die Abfrageeinheit 3 mittels der Koppelkapazität 6 hochfrequent an die Signalleitung des Anschlusskabels 61 gekoppelt ist. Damit ergibt sich auf sehr einfache Weise die erforderliche Trennung von Nutzsignal und Identifikationssignal sowie die Beibehaltung der Hochohmigkeit der Messkette zwischen Drucksensor 4 und Eingang des Ladungsverstärkers 1.

Weiters wird gemäß Fig. 2 das bekannte FSCW-Prinzip durch Integration von vorzugsweise zwei aktiv geschalteten HF-Schaltgliedern um die Fähigkeit erweitert, die unterschiedlichen Laufzeiten von Störsignalen und SAW-Nutzsignalen zur Elimination der Störsignale zu benutzen. Hintergrund dieser Idee ist, dass sich elektromagnetische (Stör-) Signale in einem elektrischen Leiter mit Lichtgeschwindigkeit fortpflanzen. Im Gegensatz dazu weist eine akustische Oberflächenwelle eine Geschwindigkeit von nur etwa 3000 m/s auf. Dies führt dazu, dass Störsignale, beispielsweise von einem für die Frequenz nicht korrekt terminierten Ende der Leitungsstrecke oder von Stoßstellen in der Leitung, zeitlich früher auftreten, während die, häufig sehr viel schwächeren, SAW-Nutzsignale mit einer gewissen Zeitverzögerung detektiert werden.

Eine kostengünstige und für den gegenständlichen Anwendungsfall besonders vorteilhafte prinzipielle technische Lösung dazu ist in Fig. 2 dargestellt. Analog zum Stand der Technik wird von der HF-Sendeeinheit 10 ein Signal mit einer stabilen Frequenz ausgesandt. Von diesem wird mittels HF-Koppler 20 ein Teil als Referenzsignal abgespalten, wobei dieser Teil gegebenenfalls über einen Verstärker 21 verstärkt werden kann. Der Hauptteil des Sendesignals passiert einen Hochfrequenzschalter 30, optional eine Verstärkerstufe 31, wobei vorteilhafterweise HF-Schalter und Verstärkerstufe in einem gemeinsamen Bauteil angeordnet sind, einen HF-tauglichen Sende/Empfangsschalter 32 und wird in die Verbindungsleitung 61 zum SAW-Element 60 eingespeist. Zu Beginn der Abfrage ist der HF-Schalter 30 geschlossen und der Sende/Empfangsschalter 32 in Sendeposition. Nach Aussenden des Signals über einen bestimmten Zeitraum wird, gesteuert über ein Signal von der Gerätesteuereinheit 50 der HF-Schalter 31 geöffnet, wobei die "offenen" Kontakte in diesem Zustand über Widerstände terminiert sind. Nach einem systemabhängig wählbaren Zeitintervall wird, wiederum über ein aktives Steuersignal der Gerätesteuerung 50, der Sende/Empfangsschalter umgeschaltet. Das Zeitintervall wird dabei so gewählt, dass die Störsignale vor der Umschaltung und die Nutzsignale vom SAW-Element nach der Umschaltung empfangen werden. Die so von den Störsignalen separierten Nutzsignale werden, gegebenenfalls nach Passieren einer Verstärkerstufe 33 in einem HF-Mischer 40 analog zum System gemäß Stand der Technik mit dem Referenzsignal verknüpft, das resultierende Signal verstärkt 41, digitalisiert 42 und in der Gerätesteuerung 50, beispielsweise einem Mikrocontroller oder einem digitalen Signalprozessor (DSP) weiter verarbeitet. Dieser Vorgang wird für jede Frequenzstufe wiederholt. Für verschiedene HF-Verstärkerstufen 21, 31, 33, 41 können, je nach Erfordernis, wahlweise rauscharme Stufen mit festem Verstärkungsfaktor oder rauscharme Verstärkerstufen mit variabler Verstärkung (variable gain amplifier, VGA) eingesetzt werden.

Das Ausblenden eines Großteils der Störsignale hat eine Reihe von Vorteilen. Neben der allgemeinen Reduktion von Interferenzen kann der Signalverstärker für das Nutzsignal 33 besser auf die schwachen SAW-generierten Signale abgestimmt werden. Im gegenständlichen Fall bedeutet dies, dass der Verstärkungsfaktor höher gewählt werden kann ohne Bauteile zu übersättigen. Insbesonders für diesen Verstärker ist somit, zur Optimierung der Signalqualität, der Einsatz eines Verstärkers mit variablem Verstärkungsfaktor vorteilhaft. Ein weiterer Vorteil des beschriebenen Aufbaus ist, dass Probleme die sich aus dem nicht idealen Verhalten von HF-Bauteilen ergeben signifikant verringert werden können. Dies betrifft insbesonders den HF-Koppler 20. Bei einem Aufbau gemäß Stand der Technik, wie in Fig. 1 dargestellt, koppelt der HF-Koppler 20 in nicht irrelevantem Ausmaß Teile des Anregungssignals auch in die Leitung, die das Nutzsignal zum HF-Mischer 40 leitet. Dies bewirkt, dass die Nutzsignale gegen einen erhöhten Signalhintergrund detektiert werden müssen. In der erfindungsgemäßen Anordnung sind die Nutzsignale vom HF-Koppler 20 unbeeinflusst. Effektiv kann dadurch die HF-Isolation zwischen Sendesignal und Nutzsignal von typischer 20 dB auf > 40 dB erhöht werden, wodurch der Signalhintergrund abnimmt und das Signal/RauschVerhältnis verbessert wird.

## Patentansprüche

1. Messsystem zur Zylinderdruckmessung an Brennkraftmaschinen, mit mehreren austauschbaren, sich in ihrer Messcharakteristik unterscheidenden piezoelektrischen Drucksensoren (4), die im Betrieb über ein Anschlusskabel (61) mit einer einen Ladungsverstärker (1) aufweisenden Auswerteeinheit (2) verbunden sind und integrierte Identifikationseinheiten mit SAW-Elementen (60) aufweisen, deren Identifikationsdaten über das Anschlusskabel (61) von einer Abfrageeinheit (3), die eine FSCW (**f**requency **s**tepping **c**ontinuous **w**ave)-Radareinheit enthält, auslesbar sind, **dadurch gekennzeichnet , dass** Auswerteeinheit (2) und Abfrageeinheit (3) über eine zwischengeschaltete gemeinsame Koppeleinheit (5) mit dem Anschlusskabel (61) verbindbar sind, und dass die Koppeleinheit (5) eine Koppelkapazität (6) und eine Koppelinduktivität (7) aufweist, welche parallel mit dem Signalleiter des Anschlusskabels (61) verbindbar sind, wobei die Abfrageeinheit (3) mittels der Koppelkapazität (6) hochfrequent an die Signalleitung des Anschlusskabels (61) gekoppelt ist, während der Ladungsverstärker (1) der Auswerteeinheit (2) mittels der Koppelinduktivität (7) niederfrequent an die Signalleitung des Anschlusskabels (61) gekoppelt ist.

2. Messsystem nach Anspruch 1, **dadurch gekennzeichnet, dass** zum Ausgleich einer nicht ausreichenden Impedanzanpassung des SAW-Elementes (60) im Drucksensor (4) eine an sich bekannte SFSCW (**s**witched **f**requency **s**tepping **c**ontinuous **w**ave)-Radareinheit in der Abfrageeinheit (3) angeordnet ist.

## Claims

1. Measurement system for the measurement of cylinder pressure in combustion engines with several exchangeable pressure sensors (4) that differ in their piezoelectric measurement characteristics, which are connected during operation by means of a connection cable (61) with an analysis unit (2) that has a charge amplifier (1) and has integrated identification units with SAW elements (60), the identification data of which can be read by a polling unit (3) which contains an FSCW (Frequency Stepping Continuous Wave) radio unit by means of the connection cable (61), **characterized by**, that analysis unit (2) and polling unit (3) can be connected by means of an intermediate joint coupling unit (5) with connection cable (61), and that the coupling unit (5) has a coupling capacitor [capacity] (6) and a coupling inductor [inductivity] (7), which can be connected parallel with the signal line of the connection cable (61), whereby the polling unit (3) is coupled to the signal line of the connection cable (61) at high frequency while the charge amplifier (1) of the analysis unit (2) is coupled to the signal line of the connection cable (61) at low frequency by means of the coupling inductor [inductivity] (7).

2. Measurement system according to claim 1, **characterized by**, that for an insufficient impedance adjustment of the SAW element (60) in the pressure sensor (4), a known per se SFSCW (Switched Frequency Stepping Continuous Wave) radar unit is located in polling unit (3).

## Revendications

1. Système de mesure pour mesurer la pression de cylindre sur des moteurs à combustion interne, comprenant plusieurs capteurs de pression (4) piézoélectriques, amovibles, se différenciant dans leur caractéristique de mesure, qui sont reliés pendant le service par un câble de raccordement (61) à une unité d'analyse (2) présentant un amplificateur de chargement (1) et présentent des unités d'identification intégrées avec des éléments SAW (60), dont les données d'identification peuvent être extraites par le câble de raccordement (61) par une unité d'interrogation (3), qui contient une unité radar FSCW (frequency stepping continuous wave), **caractérisé en ce que** l'unité d'analyse (2) et l'unité d'interrogation (3) peuvent être reliées par une unité de couplage (5) commune intercalée au câble de raccordement (61), et **en ce que** l'unité de couplage (5) présente une capacité de couplage (6) et une inductance de couplage (7), qui peuvent être reliées parallèlement au conducteur de signal du câble de raccordement (61), l'unité d'interrogation (3) étant couplée au moyen de la capacité de couplage (6) à haute fréquence avec la ligne de signalisation du câble de raccordement (61), alors que l'amplificateur de charge (1) de l'unité d'analyse (2) est couplé au moyen de l'inductance de couplage (7) à basse fréquence avec la ligne de signalisation du câble de raccordement (61).

2. Système de mesure selon la revendication 1, **caractérisé en ce qu'**une unité radar SFSCW (switched frequency stepping continuous wave) connue en soi dans le capteur de pression (4) est disposée dans l'unité d'interrogation (3) pour l'équilibrage d'une adaptation d'impédance insuffisante de l'élément SAW (60).
